# NEUE EUROPÄISCHE PATENTSCHRIFT

(11) **EP 0 419 983 B2**
(45) Veröffentlichungstag und Bekanntmachung des Hinweises auf die Entscheidung über den Einspruch: **17.07.1996**
(45) Hinweis auf die Patenterteilung: 11.08.1993
(21) Anmeldenummer: 90117807.9
(22) Anmeldetag: 15.09.1990
(51) Int. Cl.: B29C 47/06, B29C 47/70, B29C 47/26

(54) **Extrudierkopf zum Herstellen mehrschichtiger Extrudate**
Extrusion head for multi-layered extrudates
Tête d'extrusion pour la fabrication de produits extrudés à couches multiples

(30) Priorität: 26.09.1989 CH 3486/89
(43) Veröffentlichungstag der Anmeldung: 03.04.1991
(73) Patentinhaber: HAKA AG FABRIK FÜR KUNSTSTOFFPRODUKTE, CH-9202 Gossau (CH)
(72) Erfinder: Mäder, Hans, CH-9202 Gossau (CH)
(74) Vertreter: Patentanwälte Schaad, Balass & Partner AG

(56) Entgegenhaltungen:
- WO-A-88/05381
- DE-A- 2 031 890
- DE-A- 2 329 792
- FR-A- 1 589 770
- FR-A- 2 200 109
- GB-A- 1 125 742
- US-A- 2 820 249
- PATENT ABSTRACTS OF JAPAN, Band 7, Nr. 126 (M-129)[1271], 31. Mai 1983; & JP-A-58 45 038 (FURUKAWA D.K.K.K.) 16-03-1983

## Beschreibung

Die vorliegende Erfindung betrifft einen Extrudierkopf zur Herstellung mehrschichtiger Profile, insbesondere Hohlprofile.

Ein Extrudierkopf zur Herstellung von zweischichtigen Profilen, insbesondere Hohlprofilen, mit einem eine Ringdüse bildenden Element, die in einer zur Extrusionsrichtung rechtwinkligen Ebene liegt, ist bekannt (offenkundige Vorbenutzung Reifenhäuser GmbH & Co. Maschinenfabrik, D-53839 Troisdorf). Bei dem bekannten Extrudierkopf ist die Ringdüse durch ein mit einem dicht anliegenden, eine Blendenöffnung aufweisenden Einsatzring gepaartes Speiseelement gebildet. Das Speiseelement weist einen zur Blendenöffnung koaxialen Durchlass auf und ist mit einem an seinem Umfang ausgebildeten Einlassstutzen versehen. Dieser ist über einen mehrfach verzweigten Zuführkanal mit der Ringdüse verbunden.

Weitere Bekannte Extrudierköpfe sind beispielsweise in der GB-A-1 125 742 beschrieben, sie sind aus mehreren, trichterförmigen, mit radialem Abstand ineinander angeordneten Elementen aufgebaut, wobei die Innenwand des einen Elementes mit der Aussenwand des darin angeordneten Elementes einen zur Düsenöffnung hin sich verjüngenden Mantelspalt bilden. Alle diese Elemente enden an ihrer engsten Stelle in einer Ringdüse, die in einer zur Extrusionsrichtung im wesentlichen rechtwinkligen Ebene angeordnet ist. Solche Extrudierköpfe sind verhältnismässig teuer. Die Dicke der einzelnen, zu extrudierenden Schicht ist durch die Differenz zwischen dem Innendurchmesser am Ende des einen Elementes und dem Aussendurchmesser am Ende des darin angeordneten Elementes gegeben. Eine Veränderung der Dicke der zu extrudierenden Schicht kann nur in beschränktem Masse durch axiale Verstellung der trichterförmigen Elemente inbezug aufeinander erzielt werden. Ausserdem bedarf es besonderer Vorkehrungen, um mit den bekannten Extrudierköpfen Beschichtungen direkt auf ein Grundextrudat zu extrudieren. Schliesslich ist es mit den bekannten Extrudierköpfen nur möglich, eine vergleichsweise geringe Anzahl von Schichten gleichzeitig zu extrudieren. Bei Montagearbeiten werden die Einzelelemente leicht beschädigt; ausserdem ist die Montage umständlich und zeitraubend. Als Folge dieser Nachteile werden Grundprofil und darüberliegende Schichten in Einzelextrudern hergestellt, wobei zwischen den einzelnen Extrusionen das Hohlprofil abgekühlt und erwärmt werden muss.

Der Erfindung liegt das Problem zugrunde, den Extrudierkopf der eingangs beschriebenen Art derart weiterzubilden dass bei, einfachem Aufbau mehrere schichten aufgetragen werden können. Diesen Zweck erfüllt der vorgeschlagene Extrudierkopf dadurch, dass er die im Patentanspruch 1 umschriebenen Merkmale aufweist.

Bevorzugte Ausführungsformen sind in den abhängigen Ansprüchen umschrieben.

Nachstehend sind rein beispielsweise Ausführungsformen des vorgeschlagenen Extrudierkopfes anhand der Zeichnung näher beschrieben. Es zeigt:
- Fig. 1: einen direkt an einen Hauptextrudierkopf für ein Hohlprofil angeschlossenen Extrudierkopf im Längsschnitt;
- Fig. 2: in vergrössertem Massstab das mit dem Kreis II in Fig. 1 umrahmte Detail;
- Fig. 3: eine Ansicht, teilweise im Schnitt eines der Speiseelemente der Fig. 1 in der Ebene III-III und von rechts her gesehen; und
- Fig. 4: eine Ausführungsvariante zum Aufextrudieren von vier Schichten auf ein vorhandenes Rundprofil.

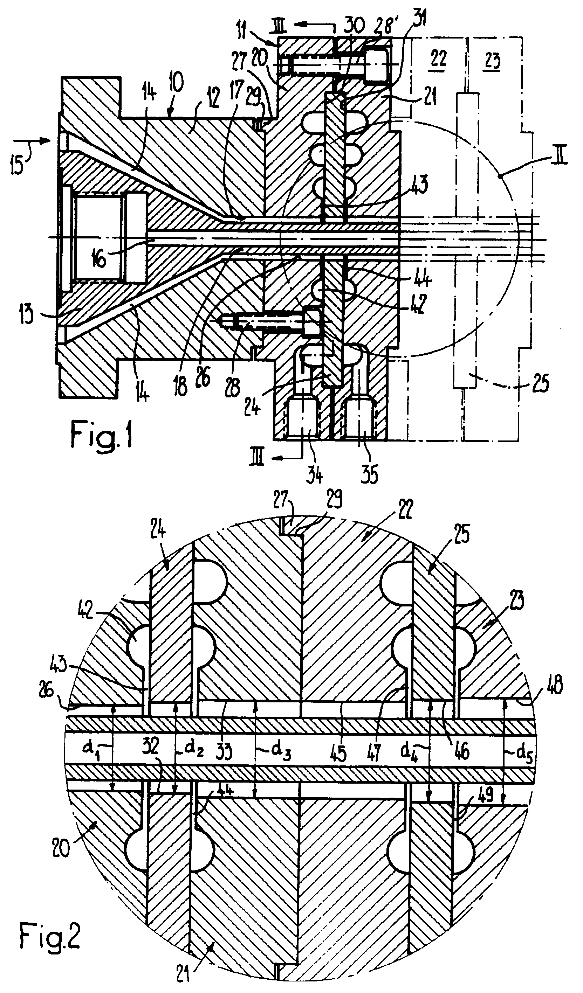

In Fig. 1 erkennt man einen an eine nicht dargestellte Schneckenpresse angeschlossenen Haupt-Extrudierkopf 10, an den unmittelbarein Extrudierkopf 11 gemäss der Erfindung angeschlossen ist. Der Haupt-Extrudierkopf besteht aus einem Matrizenteil 12, der von einem hohlen Dornteil 13 durchsetzt ist, wobei dieser sich über das Ende des Matrizenteiles 12 hinaus erstreckt. Dem zwischen der Innenseite des Matrizenteiles 12 und der Aussenseite des Dornteiles 13 vorhandenen, kegelförmigen und bezüglich "Wandstärke" sich verjüngenden Mantelspalt 14 wird durch die vorgeschaltete Schneckenpresse in Richtung des Pfeiles 15 plastifiziertes Kunststoffmaterial zugeführt, das dann den Matrizenteil 12 als den vorstehenden Abschnitt 18 des Dornteiles 13 umgebendes Hohlprofil im vorliegenden Falle als Rohr- mit einem Aussendurchmesser verlässt, der dem Innendurchmesser der Austrittsöffnung 17 des Matrizenteiles entspricht, wahrend dessen Innendurchmesser dem Aussendurchmesser des zylindrischen Endabschnittes 18 des Dornteiles 13 entspricht. Der Hohlraum 16 im Dornteil 13 kann zur Führung einer Kühlflüssigkeit dienen.

Unmittelbar an den Hauptextrudierkopf 10 schliesst ein erfindungsgemässer Ertrudierkopf 11 an, mit welchem auf die Aussenseite des Extrudates des Hauptextrusionskopfes 10 mehrere Schichten aus weiteren Kunststoffmaterialien di rekt aufextrudiert werden. Zu diesem Zweck besitzt der Extrudierkopf 11 mehrere Speiseelemente 20,21,22,23 (vergleiche auch Fig. 2). Jedes der Speiseelemente 20-23 ist mit einer dicht anliegenden Scheibe 24,25 gepaart, wobei hier die Speiseelemente 20,21 gemeinsam mit der Scheibe 24 und die Speiseelemente 22,23 gemeinsam mit der Scheibe 25 gepaart sind.

Das Speiseelement 20 weist einen zentralen Durchlass 26 auf, dessen Innendurchmesser exakt dem Innendurchmesser der Austrittsöffnung 17 entspricht und in Fig. 2 mit d₁ bezeichnet ist. Um die Koaxialität des Durchlasses 26 des mittels Bolzen 28 an der ebenen endseitigen Stirnseite des Matrizenteiles 12 dicht festgeschraubten Speiselementes 20 mit der Austrittsöffnung 17 zu gewährleisten, sind sowohl am Speiseelement 20 als auch an der endseitigen Stirnseite des Matrizenteils 12 Zentrierflächen ausgebildet, beispielsweise am Speiseelement 20 eine Ringrippe 27, die in eine Absetzung 29 an der endseitigen Stirnseite eingreift.

Sowohl im Speiseelement 20 als auch im Speiseelement 21 ist auf ihren einander zugekehrten Seiten eine kreisrunde Vertiefung 30 bzw. 31 ausgebildet, deren Tiefe je geringer ist als die halbe Dicke der zwischen den Speiseelementen 20 und 21 festgeklemmten Scheibe 24. Die Vertiefung 30 dient dazu, die kreisrunde Scheibe 24, die eine zentrale Blendenöffnung 32 (Fig. 2) aufweist, inbezug auf den Durchlass 20 koaxial zu zentrieren. Die Vertiefung 31 dient dazu, das Speiseelement 21, das ebenfalls einen zentralen Durchlass 33 (Fig. 2) aufweist, bezüglich der Scheibe 24 und damit auch bezüglich des Speiseelementes 20 zu zentrieren. Analog sind die in Fig. 1 nur mit ihren Umrissen angedeuteten Speiseelemente 22,23 mit der dazwischenliegenden Schelbe 25 an dem Speiseelement 21 montiert. Nachzutragen bleibt, dass das Speiseelement 21 mit dem Speiseelement 20 mittels Bolzen 28' verspannt ist.

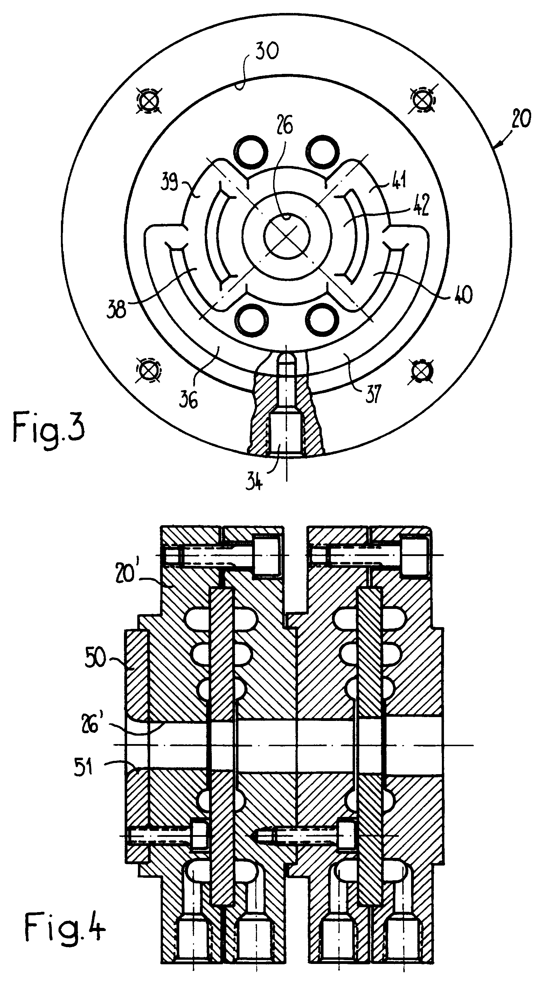

Jedes der Speiseelemente 20-23 besitzt an seinem Umfang einen Einlassstutzen, wobei in Fig. 1 nur die Einlassstutzen 34,35 der Speiseelemente 20 bzw. 21 in ausgezogenen Linien dargestellt sind. An jeden dieser Einlassstutzen ist der Auslass eines nicht dargestellten weiteren Extruders angeschlossen, das dem betreffenden Einlassstutzen ein weiteres, plastifiziertes Kunststoffmaterial zuführt. Die Speiseelemente können mit in Umfangsrichtung versetzten Einlassstutzen angeordnet sein. Entsprechend können die Anschlussstutzen der die Speiseelemente beliefernden Hilfsextruder gegeneinander versetzt sein. Wie der Fig. 3 am Beispiel des Speiseelementes 20 zu entnehmen ist, gehen vom inneren Ende des Einlassstutzens 24 in entgegengesetzten Richtungen zwei Kanalabschnitte 36,37 aus, an deren Enden nochmals in entgegengesetzten Richtungen je zwei weitere Kanalabschnitte 38,39 und 40,41 anschliessen. Diese Kanalabschnitte 36-41 haben die Form einer kreisbogenförmigen Nut mit (siehe Fig. 1) im wesentlichen einem halbkreisförmigen Querschnitt, wobei der Durchlassquerschnitt der Kanalabschnitte 36,37 grösser als jener der Kanalabschnitte 38-41 ist. Die Kanalabschnitte 38-41 münden an Stellen, die voneinander einen Umfangsabstand von 90° haben, in eine in sich geschlossene Umfangsnut 42, die über ihren gesamten Umfang mit einem zwischen der ebenen Scheibe 24 und der ihr zugekehrten Seite des Speiseelementes 20 vorhandenen Ringspalt 43 (Fig. 1,2) in Verbindung steht. Dieser Ringspalt 43 mündet in die Übergangsstelle zwischen dem Durchlass 26 des Speiseelementes 20 und der Blendenöffnung 32 der Scheibe 24. Diese Blendenöffnung 32 hateinen mit d₂ in Fig. 2 bezeichneten Innendurchmesser, der um die doppelte Schichtdicke derdurch den Ringspalt 43 auf das mit dem Aussendurchmesser d₁ anfallende Extrudat aufextrudierte Schicht grösser als d₁ ist. Die Blendenöffnung 32 dient somit auch als Kalibrieröffnung.

Die der Scheibe 24 zugekehrte Seite des Speiseelementes 21 trägt einen vom Einlassstutzen 35 ausgehenden Zuführkanal, der gleich ausgebildet ist, wie der anhand Fig. 3 beschriebene Zuführkanal des Speiselementes 20, weshalb sich eine Beschreibung desselben an dieser Stelle erübrigt. Der Zuführkanal des Speiselementes 21 endet in einem Ringspalt 44 (Fig. 2), der zum Durchlass 33 hin offen ist. Dieser Durchlass 33 hat einen mit d₃ bezeichneten Innendurchmesser, der um die doppelte Schichtdicke der durch das Speiseelement 21 aufextrudierten Stoffschicht grösser ist als d₂.

Der zentrale Durchlass im Speiseelement 22 ist mit 45 bezeichnet und besitzt ebenfalls den Durchmesser d₃. Der an der der Scheibe 25 zugekehrten Seite des Speiseelementes 22 ausgebildete Zuführkanal ist wiederum gleich ausgebildet, wie anhand der Fig. 3 beschrieben. Dieser mündetwiederum in einen mitderflachen Seite der Scheibe 25 gebildeten, zum Durchlass 45 und zur Blendenöffnung 46 der Scheibe 45 hin offenen Ringspalt 47, durch den eine weitere Schicht auf die bereits vorhandenen zwei aufextrudierten Schichten aufextrudiert wird. Die Blendenöffnung 46 hat daher einen mit d₄ bzeichneten Innendurchmesser, der um das Doppelte der Schichtdicke der durch den Ringspalt 47 aufextrudierten Schicht grösser ist als d₃.

Das Speiseelement 23 trägt auf seiner der Scheibe 25 zugekehrten Seite einen Zuführkanal, der gleich ausgebildet ist wie anhand der Fig. 3 beschrieben. Er mündet in einen zur Blendenöffnung 46 der Scheibe 25 und zum Durchlass 48 im Speiseelement 23 hin offenen Ringspalt 49. Der Durchlass 48 hat einen mit d₅ bezeichneten Innendurchmesser, der um die doppelte Schichtdicke der durch den Ringspalt 49 aufextrudierten Schicht grösser ist als d₄.

Aus dem gesagten ergibt sich, dass der beschriebene Extrudierkopf nicht nur einen sehr einfachen Aufbau aufweist, sondern auch mit einem Mindestaufwand für andere Abmessungen der zu extrudierenden Schichten umrüstbar ist. In der Tat besitzen alle Speiselemente mit Ausnahme Ihrer zentralen Durchlässe die gleichen Abmessungen. Das gleiche gilt für die Scheiben.

In der Fig. 4 ist ein Längsschnitt durch den beschriebenen Extrudierkopf in seiner Ausbildung zum Aufextrudieren von vier Kunststoffschichten auf ein bereits vorhandenes Rundprofil, beispielsweise auf ein Kunststoffrohr, gezeigt. Der Aufbau der Ausführungsform der Fig. 4 ist identisch zu jenem der Fig. 1, mit Ausnahme, dass diese nicht unmittelbaran einen Hauptextrusionskopf anschliesst, sondern an dessen Stelle mit einer koaxialen Eingangsblende 50 mit einer Blendenöffnung 51 versehen ist, deren Innendurchmesser gleich wie der Innendurchmesser des zentralen Durchlasses 26' im daran anschliessenden Speiseelement 20' ist.

Obwohl hier die Erfindung mit einem mehrschichtigen Rohr veranschaulicht wurde, eignet sie sich ebenso zur Herstellung anderer mehrschichtiger Hohlprofile.

## Patentansprüche

1. Extrudierkopf zum Herstellen mehrschichtiger Profile, insbesondere Hohlprofile, der dazu bestimmt ist, einem Hauptextrudierkopf (10) für ein Grundprofil nachgeschaltet zu sein und auf die Aussenseite des Grundprofils mehrere Schichten aufzutragen, mit je Schicht einer in einer zur Extrusionsrichtung im wesentlichen rechtwinkligen Ebene liegenden Ringdüse (43,44,47,49), die durch ein mit einer dicht anliegenden, eine Blendenöffnung (32,46) aufweisenden Scheibe (24,25) gepaartes Speiseelement (20,21,22,23) gebildet ist, das einen zur Blendenöffnung (32,46) koaxialen Durchlass (26,33,45,48) aufweist, und das mit einem an seinem Umfang ausgebildeten Einlassstutzen (34,35) versehen ist, der über einen mehrfach verzweigten, in Richtung zur Scheibe hin offenen Zuführkanal (36,37,38,39,40,41,42) mit der Ringdüse (43,44,47,49) verbunden ist, wobei zwei beidseitig gegen eine Scheibe (24,25) anliegende Speiseelemente (20,21,22,23) beidseits der Scheibe (24,25) mit dieser zwei Ringdüsen (43,44,47,49) bilden und die Durchlässe (26,33,45,48) der Speiseelemente (20,21,22,23) und die Blendenöffnung (32,46) der Scheibe (24,25) zwecks Bildung übereinander liegender Schichten unterschiedlich gross sind.

2. Extrudierkopf nach Patentanspruch 1, dadurch gekennzeichnet, dass die zwei Speiseelemente (20,21;22,23) mittels Schrauben (28') gegeneinander verspannt sind und die Scheibe (24;25) zwischen sich festklemmen.

3. Extrudierkopf nach Patentansprüch 1 oder 2, dadurch gekennzeichnet, dass der Zuführkanal zwei vom Einlassstutzen (34,35) in entgegengesetzten Richtungen ausgehende Kanalabschnitte (36,37) aufweist, von deren Enden je zwei weitere Kanalabschnitte (38,39,40,41) in entgegengesetzten Richtungen ausgehen, die ihrerseits in einen den Durchlass (26,33,45,48) des Speiseelementes (20,21,22,23) umgebenden Ringspalt (43,44,47,49) einmünden, der die Ringdüse bildet.

4. Extrudierkopf nach Patentanspruch 3, dadurch gekennzeichnet, dass die weiteren Kanalabschnitte (38,39; 40,41) in gleichmässigen Umfangsabständen in den Ringspalt (43,44,47,49) einmünden.

5. Extrudierkopt nach Patentanspruch 2 oder 3, dadurch gekennzeichnet, dass die Kanalabschnitte (36-41) einen zum Durchlass (28,33,45,48) des Speiseelementes (20-23) koaxialen, kreisbogenförmigen Verlauf aufweisen.

6. Extrudierkopf nach einem der Patentansprüche 3-5, dadurch gekennzeichnet, dass die Kanalabschnitt (36-41) einen im wesentlichen halbkreisförmigen Querschnitt aufweisen.

7. Extrudierkopf nach einem der Patentsprüche 3-6, dadurch gekennzeichnet, dass die zuerst genannten Kanalabschnitte (36,37) einen grösseren Durchflussquerschnitt als die weiteren Kanalabschnitte (38-41) aufweisen.

8. Extrudierkopf nach Patentanspruch 2, dadurch gekennzeichnet, dass die der Scheibe (24,25) abgekehrten Seiten der beiden Speiseelemente (20,21:22,23) mit gegengleich geformten, zum Durchlass (26,33,45,48) koaxialen Zentrierflächen (27,29), versehen sind.

9. Extrudierkopf nach Patentanspruch 2, dadurch gekennzeichnet, dass die Scheibe (24,25) kreisrund ist und die beiden Speiseelemente (20,21:22,23) auf ihrer der Scheibe (24,25) zugekehrten Seite eine kreisrunde Vertiefung (30,31) aufweisen, deren Innendurchmesser dem Aussendurchmesser der Scheibe (24,25) entspricht und deren Tiefe geringer als die halbe Dicke der Scheibe (24,25) ist.

10. Extrudierkopf nach einem der vorangehenden Ansprüche, dadurch gekennzeichnet, dass er mit dem Hauptextrudierkopf (10) verbunden ist.

## Claims

1. An extruder head for producing multilayer sections, in particular hollow sections, which is intended to be disposed down the line from a main extruder head (10) for a base section, and to apply several layers to the outer side of the base section by means of per layer a tubular die (43, 44, 47, 49) lying in a plane substantially at right angles to the extrusion direction, which is formed by a feeding element (20, 21, 22, 23) paired with a closely applied disk (24, 25) having an aperture (32, 46), which element has a passageway (26, 33, 45, 48) coaxial with the aperture (32, 46) and which is provided with an intake pipe (34, 35) formed at its periphery, which pipe is connected to the tubular die (43, 44, 47, 49) via a multibranched feeder duct (36, 37, 38, 39, 40, 41, 42) open in the direction towards the disk, in which arrangement two feeding elements (20, 21, 22, 23) bearing on both sides against a disk (24, 25) form on both sides of the disk (24, 25) two tubular dies (43, 44, 47, 49) with the latter, and the passageways (26, 33, 45, 48) of the feeding elements (20, 21, 22, 23) and the aperture (32, 46) of the disk (24, 25) have different sizes for the purpose of forming layers lying on top of one another.

2. An extruder head according to patent claim 1, characterized in that the two feeding elements (20, 21; 22, 23) are braced against each other by means of screws (28') and clamp the disk (24; 25) between them.

3. An extruder head according to patent claim 1 or 2, characterized in that the feeder duct has two duct sections (36, 37) starting from the intake pipe (34, 35) in opposite directions, from the ends of which sections, two further duct sections (38, 39; 40, 41) respectively start in opposite directions, which for their part lead into an annular gap (43, 44, 47, 49) surrounding the passageway (28, 33, 45, 48) of the feeding element (20, 21, 22, 23), which gap forms the tubular die.

4. An extruder head according to patent claim 3, characterized in that the further duct sections (38, 39; 40, 41) lead into the annular gap (43, 44, 47, 49) at uniform peripheral distances.

5. An extruder head according to patent claim 2 or 3, characterized in that the duct sections (36 - 41) have a circular-arcuate shape coaxial with the passageway (26, 33, 45, 48) of the feeding element (20 - 23).

6. An extruder head according to one of patent claims 3 - 5, characterized in that the duct sections (36-41) have a cross-section that is substantially semicircular.

7. An extruder head according to one of patent claims 3 - 8, characterized in that the first mentioned duct sections (36, 37) have a larger throughflow cross-section than the further duct sections (38-41).

8. An extruder head according to patent claim 2, characterized in that the sides of the two feeding elements (20, 21; 22, 23) remote from the disk (24, 25) are provided with centring faces (27, 29) with matching shapes and coaxial with the passageway (26, 33, 45, 48).

9. An extruder head according to patent claim 2, characterized in that the disk (24, 25) is circular, and the two feeding elements (20, 21; 22, 23) have on their side facing the disk (24, 25) a circular recess (30, 31) whose internal diameter corresponds to the external diameter of the disk (24, 25) and whose depth is smaller than half the thickness of the disk (24, 25).

10. An extruder head according to one of the preceding claims, characterized in that it is connected to the main extruder head (10).

## Revendications

1. Tête d'extrusion pour la fabrication de profilés multicouches, en particulier de profilés creux, qui est destinée à être installée en aval d'une tête d'extrusion principale (10) pour un profilé de base et à déposer plusieurs couches sur la face extérieure du profilé de base, avec pour chaque couche une buse annulaire (43, 44, 47, 49) située dans un plan sensiblement perpendiculaire à la direction d'extrusion, et qui est formée par un élément d'alimentation (20, 21, 22, 23) associé par paire à un disque (24, 25) présentant une ouverture d'étranglement (32, 46) et appliqué de façon étanche, l'élément d'alimentation présentant un passage (26, 33, 45, 48) coaxial à l'ouverture d'étranglement (32, 46) et étant pourvu d'une tubulure d'admission (34, 35) réalisée à sa périphérie, et reliée à la buse annulaire (43, 44, 47, 49) par l'intermédiaire d'un canal d'amenée (36, 37, 38, 39, 40, 41, 42) à plusieurs ramifications ouvert en direction du disque, dans laquelle tubulure d'admission deux éléments d'alimentation (20, 21, 22, 23) disposés de part et d'autre d'un disque (24, 25) forment avec le disque (24, 25) deux buses annulaires (43, 44, 47, 49) de part et d'autre de celui-ci et les passages (26, 33, 45, 48) des éléments d'alimentation (20, 21, 22, 23) et l'ouverture d'étranglement (32, 46) du disque (24, 25) sont de grandeurs différentes pour former des couches situées l'une au-dessus de l'autre.

2. Tête d'extrusion selon la revendication 1, caractérisée en ce que les deux éléments d'alimentation (20, 21; 22, 23) sont serrés l'un contre l'autre au moyen de vis (28') et serrent entre eux le disque (24; 25).

3. Tête d'extrusion selon la revendication 1 ou 2, caractérisée en ce que le canal d'amenée présente deux tronçons de canal (36, 37) partant de la tubulure d'admission (34, 35), dans des directions opposées, des extrémités desquelles partent chaque fois deux autres tronçons de canal (38, 39; 40, 41), dans des directions opposées, qui débouchent à leur tour dans une fente annulaire (43, 44, 47, 49), entourant le passage (26, 33, 45, 48) de l'élément d'alimentation (20, 21, 22, 23), et qui forme la buse annulaire.

4. Tête d'extrusion selon la revendication 3, caractérisée en ce que les autres tronçons de canal (38, 39; 40, 41) débouchent dans la fente annulaire (43, 44, 47, 49), suivant des espacements circonférentiels réguliers.

5. Tête d'extrusion selon la revendication 2 ou 3, caractérisée en ce que les tronçons de canal (36 - 41) présentent un profil en forme d'arc de cercle, coaxial au passage (26, 33, 45, 48) de l'élément d'alimentation (20 - 23) .

6. Tête d'extrusion selon l'une des revendications 3 à 5, caractérisée en ce que les tronçons de canal (36 - 41) présentent une section transversale sensiblement en forme de demi-cercle.

7. Tête d'extrusion selon l'une des revendications 3 à 6, caractérisée en ce que les premiers tronçons de canal cités (36, 37) présentent une section transversale d'écoulement, supérieure à celle des autres tronçons de canal (38 - 41).

8. Tête d'extrusion selon la revendication 2, caractérisée en ce que les faces des deux éléments d'alimentation (20, 21; 22, 23) situées à l'opposé du disque (24, 25), sont pourvues de surfaces de centrage (27, 29), de formes conjuguées, coaxiales au passage (26, 33, 45, 48).

9. Tête d'extrusion selon la revendication 2, caractérisée en ce que le disque (24, 25) est circulaire et les deux éléments d'alimentation (20, 21; 22, 23) présentent, sur leur face tournée vers le disque (24, 25), une cavité circulaire (30, 31) dont le diamètre intérieur correspond au diamètre extérieur du disque (24, 25) et dont la profondeur est inférieure à la moitié de l'épaisseur du disque (24, 25).

10. Tête d'extrusion selon l'une des revendications précédentes, caractérisée en ce qu'elle est reliée à la tête d'extrusion principale (10).
